(19) Europäisches Patentamt
European Patent Office
Office européen des brevets

(11) **EP 2 995 910 B1**

(12) **EUROPÄISCHE PATENTSCHRIFT**

(45) Veröffentlichungstag und Bekanntmachung des Hinweises auf die Patenterteilung:
16.11.2016 Patentblatt 2016/46

(51) Int Cl.:
*G01D 5/244* (2006.01)      *G01D 5/245* (2006.01)
*G01D 5/247* (2006.01)      *G01D 5/248* (2006.01)
*G01D 5/249* (2006.01)

(21) Anmeldenummer: **14184400.1**

(22) Anmeldetag: **11.09.2014**

(54) **Absolutlage-Messsystem und -Verfahren**

Absolute position monitoring system and method

Système et procédé de mesure de position absolue

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**16.03.2016 Patentblatt 2016/11**

(73) Patentinhaber: **Baumüller Nürnberg GmbH**
**90482 Nürnberg (DE)**

(72) Erfinder: **Götz, Fritz Rainer**
**73230 Kirchheim unter Teck (DE)**

(74) Vertreter: **Götz, Georg Alois**
**Intellectual Property IP-GÖTZ**
**Patent- und Rechtsanwälte**
**Am Literaturhaus, Königstrasse 70**
**90402 Nürnberg (DE)**

(56) Entgegenhaltungen:
**DE-A1-102007 008 870**     **US-A- 4 757 244**

EP 2 995 910 B1

## Beschreibung

Die Erfindung betrifft einen Inkrementalgeber, der z.B. ein lineares, insbesondere aber auch rotatorisches Messsystem, also ein Drehgeber, sein kann. Bei bekannten Inkrementalgebern, d.h. zyklisch absoluten Positionsgebern werden Markenteilungen (Abstand von Marke zu Marke) abgetastet, die - im Fall eines Drehgebers - auf einem drehbaren, rotationssymmetrischen oder - im Falle eines linearen Messsystems - linearen, längs verschiebbaren Teilungsmarkenträger ausgebildet sein können. Die Teilung kann, wie an sich bekannt, durch magnetische und nicht-magnetische, optisch durchsichtige und undurchsichtige Segmente oder durch Zähne und Zahnlücken (auf einem Zahnrad oder einer Zahnstange), die jeweils abwechselnd aufeinander folgen, realisiert sein. Der Geber enthält Abtastelemente, die auf die Teilungsmarken ansprechen. Am Ausgang der entsprechenden Abtastelemente erhält man ein Ausgangssignal, z.B. eine Folge von Strom- oder Spannungsimpulsen, deren Anzahl (Inkremente) einem groben Winkel- oder Längspositionswert entspricht.

Aus der DE 43 31 151 C2 ist ein Verfahren bekannt, um innerhalb eines von zwei benachbarten Teilungsmarken auf dem Träger gebildeten und/oder begrenzten Teilungssegmentes die Absolutposition des beweglichen Teilungsmarkenträgers zu ermitteln. In einem Mikrorechner kann die Anzahl der gezählten Teilungsmarken bzw. - segmente (Grobposition) und die ermittelte Absolutposition (Feinposition) zur Gesamtposition gemäß bekannter, mathematischer Beziehungen kombiniert werden. In DE 43 31 151 C2 wird ein mathematisches Modell des Messvorgangs verwendet. Das Modell basiert auf einem Parametervektor und wird parallel zum laufenden Messbetrieb berechnet und laufend aktualisiert. Hierdurch wird der Parametervektor an den aktuellen Messvorgang angepasst.

Aus der DE 10 2004 062 278 A1 ist es bekannt, einen Inkrementalgeber mit Inkrementen (Teilungssegmenten) auszurüsten, deren Periodenlänge (Länge) unterschiedliche Werte annehmen, d.h. paarweise verschieden sind. Durch Messsignalauswertung ist es möglich, zunächst das aktuelle Teilungsintervall (Teilungssegment, Grobposition) zu ermitteln und durch eine anschließende Feinauswertung mittels Interpolation die Absolutposition innerhalb des aktuellen Intervalls (innerhalb des Teilungssegments, Feinposition) zu ermitteln.

Die US 4 757 244 zeigt einen Absolutwertgeber mit einem Teilungträger, der entlang der Bewegungsrichtung magnetische Segmente unterschiedlicher Länge I enthält, wobei jedes Segment in Bewegungsrichtung um den Betrag $\Delta$l länger als das unmittelbar vorangehende Segment ist.

Aus der DE 10 2007 008 870 A1 ist ebenfalls ein Teilungträger bekannt, der Teilungssegmente unterschied- licher Länge aufweist, wobei jeweils zwei der Segmente die gleiche Länge haben.

Aufgabe der Erfindung ist es, ein verbessertes Absolutlage-Messsystem und -Verfahren vorzuschlagen.

Die Aufgabe wird gelöst durch ein Verfahren gemäß Patentanspruch 1. Dieses dient zum Ermitteln der Absolutlage (Grobposition und Feinposition, also absolute Messung anstelle von nur inkrementaler Messung) eines sich bewegenden Trägers für Teilungsmarken eines Inkrementalgebers gegenüber einer Sensoranordnung. Optional könnte die Sensoranordnung ortsfest sein. Auf dem Träger sind Teilungssegmente mit paarweise verschiedenen Segmentlängen zwischen den Teilungsmarken vorhanden. In einem Schritt a) wird mit einem ersten Sensor der Sensoranordnung ein erstes Messsignal erzeugt. Entsprechend wird in einem Schritt b) mit einem zweiten Sensor der Sensoranordnung ein zweites Messsignal erzeugt. Der zweite Sensor ist zum ersten Sensor entlang einer Bewegungsrichtung des Trägers versetzt angeordnet. Mit anderen Worten befinden sich also erster und zweiter Sensor an einer jeweiligen ersten und zweiten ortsfesten Messposition gegenüber dem beweglichen Träger für Teilungsmarken. Die Messsignale entstehen durch Vorbeiführen und Detektieren der Teilungsmarken an den Sensoren. Der zweite Sensor befindet sich also an einer entlang der Bewegungsrichtung des Trägers zur ersten Messposition versetzten zweiten Messposition.

In einem Schritt c) wird zunächst ein idealer Betrieb der Sensoren und des Trägers angenommen: Ausgehend von einer theoretisch idealen Betrachtung mit idealen Messsignalen des ersten und zweiten Sensors wird für jedes Teilungssegment der jeweilige theoretische Phasenversatz zwischen den theoretisch idealen Messsignalen ermittelt. Aufgrund der paarweise verschiedenen Segmentlängen sind auch die jeweiligen theoretischen Phasenversätze der Teilungssegmente paarweise verschieden. So kann jeder theoretische Phasenversatz und jedes Teilungssegment ein- eindeutig einander zugeordnet werden. Der für ein bestimmtes Teilungssegment charakteristische und eindeutige Phasenversatz zwischen den entsprechenden ersten und zweiten Messsignalen ergibt sich aufgrund des gegebenen Versatzes der Sensoren der Sensoranordnung sowie der eindeutig charakteristischen Segmentlänge des betreffenden Teilungssegments.

In einem Schritt d) wird ein erstes und zweites Modellsignal erzeugt, welche auf einem Satz von Parametern basieren bzw. durch diese bestimmt sind. Jedes dieser Modellsignale modelliert hierbei jeweils das zugehörige bzw. ihm zugeordnete (reale) Messsignal. Hierzu werden zunächst Startwerte für die Parameter verwendet. Anschließend werden in einem Schritt e) mehrere Teilschritte des Verfahrens wiederholt durchgeführt: Im Teilschritt aa) wird das jeweilige Modellsignal an das zugehörige (reale) Messsignal angepasst, indem die das Modellsignal bestimmenden Parameter adaptiert werden. Dies geschieht anhand eines Adaptionskriteriums und der aktuellen realen Werte der Messsignale. Als Adaptionskriterium kommen sämtliche bekannten Adaptionskriterien in Frage, beispielsweise kleinstes Fehlerquadrat, Gradientenverfahren usw. Anschließend wird in einem Teilschritt bb) im Modell, d.h. zwischen den Modellsignalen deren aktueller Modell-Phasenversatz ermittelt. Anschließend wird in einem Teilschritt cc) aus den oben ermittelten theoretischen Phasenversätzen derjenige ausgewählt, der (am besten) dem aktuellen Modellphasenversatz entspricht. Das zum ausgewählten theoretischen Phasenversatz ein-eindeutig gehörende Teilungssegment wird als aktuelles Teilungssegment für die (aktuelle) Absolutlage des Trägers gewählt. Somit ist die Groblage des Trägers auf das ausgewählte Teilungssegment festgelegt. Abschließend wird in einem Teilschritt dd) noch die Absolutlage ($\varphi$) des Trägers gegenüber der Sensoranordnung aus der bekannten Lage des aktuellen Teilungssegments (Groblage) und der Relativlage ($\varphi_{rel}$) innerhalb des aktuellen Teilungssegments (Feinlage) ermittelt. Letztere wird wiederum aus der aktuellen Phasenlage ($\alpha$m) der Modellsignale (xm, ym) innerhalb des aktuellen Teilungssegments bestimmt.

Durch die Erfindung erfolgt die Ermittlung der Absolutlage des Trägers direkt aus den Messsignalen. Ein Zählen bzw. Mitverfolgen von Teilungsmarken bzw. -segmenten ist nicht nötig. Das Verfahren ist störsicher, da dabei die Ermittlung der Absolutposition innerhalb eines Teilungssegments modellbasiert erfolgt. Auch die Ermittlung der Teilungssegmente erfolgt störsicher, da auch diese modellbasiert erfolgt. Es ergibt sich ein Geber zur Messung einer hochaufgelösten Geberposition. Die Information über die Grobposition wird also durch die aktuelle Phasenverschiebung beider Messsignale ausgedrückt. Das Messverfahren eignet sich für absolut anstelle von nur inkremental messende und dennoch kostengünstige Anwendungen.

In einer bevorzugten Ausführungsform wird in Schritt bb) der aktuelle Modell-Phasenversatz aus dem Satz der Parameter ermittelt. Da in einem entsprechenden Verfahren der Parametervektor in der Regel ohnehin explizit vorhanden ist, beispielsweise als Wertevektor im Speicher eines Rechners, ist dieser zur Auswertung besonders leicht zugänglich, was die Ermittlung des Modell-Phasenversatzes erleichtert.

In einer weiteren bevorzugten Ausführungsform der Erfindung wird aus den (realen) Messsignalen eine (reale) komplexe Messortskurve erzeugt, in dem das erste Messsignal als deren Realteil und das zweite Messsignal als deren Imaginärteil benutzt wird. Außerdem wird eine komplexe Modellortskurve erzeugt, deren Realteil durch das erste Modellsignal und deren Imaginärteil durch das zweite Modellsignal gebildet wird. In Schritt aa) wird dann in der komplexen Ebene die Modellortskurve an die Messortskurve angepasst. Dies führt zu einer gleichzeitigen Anpassung der jeweiligen Modellsignale an die zugehörigen Messsignale. Die Ermittlung der Absolutlage der Sensoranordnung in Schritt dd) erfolgt dann aus der aktuellen Phasenlage der Modellortskurve. Bei der Anpassung der Ortskurven aneinander erfolgt eine synchrone bzw. voneinander abhängige Anpassung der jeweiligen Real- und Imaginärteile der Modellsignale, was in der Regel einfacher und effektiver durchzuführen ist, als eine jeweilige Einzelanpassung des ersten und zweiten Modellsignals an das erste und zweite Messsignal.

In einer bevorzugten Ausführungsform der Erfindung wird in Schritt d) das erste Modellsignal in der Form

$$xm = x0 + (xc + xd)\cos \propto \, -(yc - yd)\sin \propto$$

und das zweite Signal in der Form

$$ym = y0 + (yc + yd)\cos \propto \, +(xc - xd)\sin \propto$$

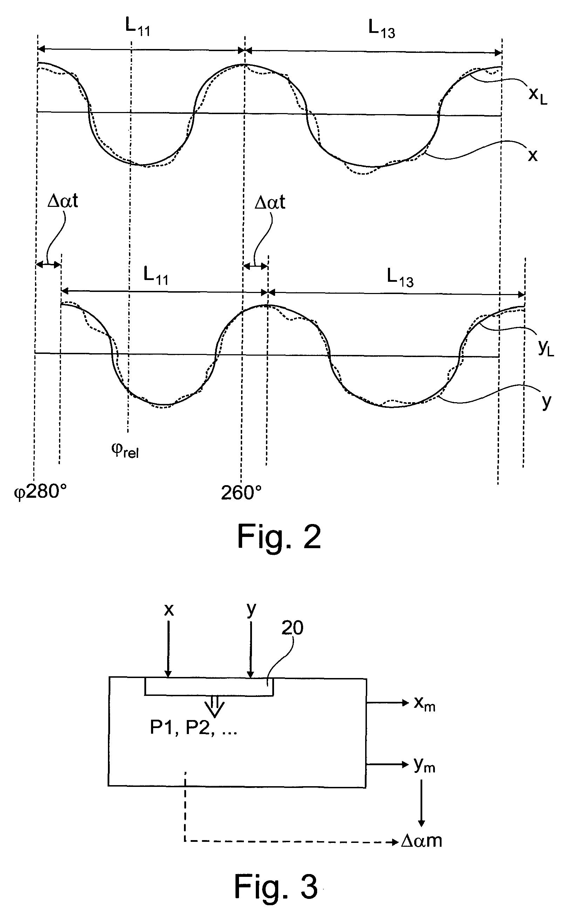

mit den Parametersatz {x0, y0, xc, yc, xd, yd} dargestellt. Die Wahl des genannten Modells mit entsprechenden Parametern führt zu einer besonders mathematisch einfachen Parameterermittlung bzw. Parameteradaption. Für die Wahl von Startwerten im Schritt d) bietet sich beispielsweise die Wahl des Parameters xc zu 1 und die Wahl sämtlicher restlicher fünf Parameter zu 0 an. Somit ergibt sich für das erste Modellsignal die Cosinusform, und für das zweite Modellsignal die Sinusform als zu adaptierende Ausgangssignalform. Durch eine hinsichtlich der zur erwartenden Messsignale angepasste Positionierung der ersten und zweiten Sensoren relativ zum Träger kann so eine besonders günstige und schnelle Adaption der Modellsignale an die Messsignale erfolgen. Für eine umfassende Darstellung zu derartigen Modellsignalen wird auf die DE 43 31 151 C2 verwiesen, siehe z.B. dort die Gleichungen (16) und (17) oder das "Vergleichsmodell 16" in deren Fig. 2 mit zugehöriger Beschreibung. Die Robustheit des dort vorgestellten Verfahrens bezüglich örtlicher aus zeitlicher Fehlmessungen ("Ausreißer") überträgt sich auch auf das vorliegende Verfahren.

In einer bevorzugten Ausführungsform der Erfindung werden in Schritt c) als theoretisch ideale Messsignale rein cosinusförmige Messsignale angenommen, die als Periodenlänge die Segmentlänge des jeweiligen Teilungssegments aufweisen und jeweils an dessen Anfang (wenn die begrenzende Teilungsmarke den betreffenden Sensor passiert) denselben Phasenwinkel aufweisen. Entscheidend ist hierbei die Verlaufsform der theoretisch idealen Messsignale als "cosinusförmig". Bei entsprechendem Phasenwinkel am Anfang des Teilungssegments kann es sich strenggenommen also zum Beispiel auch um eine Sinusform handeln.

In einer weiteren Ausführungsform des Verfahrens wird in Schritt bb) das erste Modellsignal in der Form

$$xm = x0 + a \cos \omega t + b \sin \omega t = x0 + c \sin(\omega t + \gamma)$$

und das zweite Modellsignal in der Form

$$ym = y0 + d \cos \omega t + e \sin \omega t = y0 + f \sin(\omega t + \eta)$$

dargestellt. Der Phasenversatz wird dann aus der Differenz $\gamma$ - $\eta$ wie folgt ermittelt (siehe hierzu "Hütte. Des Ingenieurs Taschenbuch. Theoretische Grundlagen. 28. neubearbeitete Auflage, Berlin, Verlag von Wilhelm Ernst & Sohn, (1955), S. 568"):

$$x - x0 = (xc + xd) \cos \propto \; -(yc - yd) \sin \propto$$

$$y - y0 = (yc + yd) \cos \propto \; +(xc - xd) \sin \propto$$

$$a \cos \omega t + b \sin \omega t = c \sin(\omega t + \gamma)$$

$$c^2 = a^2 + b^2, \tan \gamma = \frac{a}{b}$$

wobei

$$a = x_c + x_d, b = -y_c + y_d$$

$$c^2 = (x_c + x_d)^2 + (-y_c + y_d)^2, \tan \gamma = \frac{x_c + x_d}{-y_c + y_d}$$

bzw.

$$d \cos \omega t + e \sin \omega t = f \sin(\omega t + \eta)$$

$$f^2 = d^2 + e^2, \tan \eta = \frac{d}{e}$$

wobei

$$d = y_c + y_d, e = x_c - x_d$$

$$f^2 = (y_c + y_d)^2 + (x_c - x_d)^2, \tan \eta = \frac{y_c + y_d}{x_c - x_d}$$

Die Phasenverschiebung *zwischen x - x0 und y - y0* ist die Differenz von $\gamma$ und $\eta$. Eine derartige Signaldarstellung ist mathematisch besonders einfach zu handhaben und führt zu einer besonders einfachen Ermittlung des Modellphasenversatzes. Insbesondere in Verbindung mit der oben genannten mathematischen Darstellung der Modellsignale in Schritt d).

In einer weiteren bevorzugten Ausführungsform der Erfindung wird in Schritt b) der zweite Sensor höchstens um die Hälfte der kleinsten Segmentlänge entlang des Trägers zum ersten Sensor versetzt angeordnet. Diese Beschränkung dient dazu, die Ermittlung jeweiliger eindeutiger theoretischer Phasenversätze zwischen theoretisch idealen Messsignalen im Schritt c) sicherzustellen und somit die ein-eindeutige Zuordnungsbarkeit zu den jeweiligen Teilungssegmenten.

Die Aufgabe der Erfindung wird weiterhin gelöst durch einen Träger für Teilungsmarken eines Inkrementalgebers gemäß Patentanspruch 8. Auf dem Träger sind entlang einer Bewegungsrichtung Teilungssegmente angeordnet. Die Segmentlänge zwischen den Teilungsmarken ist für jedes der Teilungssegmente paarweise verschieden. Entlang der Bewegungsrichtung des Trägers ist etwa mittig am Träger ein erstes Teilungssegment angeordnet. Für einen kreisförmigen Träger eines Drehgebers bezieht sich "mittig" in Umfangsrichtung auf einen Bezugswinkel, d.h. einen "Endpunkt" des Trägers. Das erste Teilungssegment weist eine Grundlänge auf. Die Längen der restlichen Teilungssegmente entlang der Bewegungsrichtung steigen ausgehend vom ersten Teilungssegment jeweils wechselweise ausschließlich an. In einer alternativen Ausführungsform der Erfindung nehmen die Längen der restlichen Teilungssegmente ausgehend vom ersten Teilungssegment jeweils wechselweise zu beiden Seiten ausschließlich ab.

Diese Ausgestaltung des Trägers hat zur Folge, dass trotz unterschiedlich großer Teilungssegmente zwei benachbarte Teilungssegmente sich jeweils nur möglichst wenig bezüglich ihrer Segmentlänge unterscheiden; dies gilt für lineare oder rotatorische Träger. Dies wiederum führt z.B. bei Verwendung des o.g. Verfahrens zu lediglich kleinen Änderungen des jeweiligen theoretischen Phasenversatzes von Messsignalen in benachbarten Teilungssegmenten. Bei einem rotatorischen Träger für Teilungsmarken hat die erfindungsgemäße Ausgestaltung außerdem zur Folge, dass die vom ersten Teilungssegment maximal entfernten Teilungssegmente (die am o.g. "Endpunkt" aneinandergrenzen) sich ebenfalls bezüglich ihrer Segmentlänge so wenig wie möglich unterscheiden. In diesem Fall entsteht eine ringförmig geschlossene Anordnung, in der sich alle benachbarten Teilungssegmente auf dem gesamten, durch den Träger gebildeten Ring jeweils nur möglichst wenig in ihrer Segmentlänge unterscheiden. Der geringe Unterschied zwischen den Segmentlängen der Teilungssegmente führt insbesondere dazu, dass beim o.g. Verfahren das Modell beim Überschreiten einer Segmentgrenze nur wenig angepasst werden muss, da sich z.B. die Phasenversätze in benachbarten Teilungssegmenten nur geringfügig unterscheiden. Mit anderen Worten kann das Modell den realen Verhältnissen gut folgen. Der Inkrementalgeber ist dank des Trägers als Absolutlage-Messsystem geeignet, z.B. in Verbindung mit dem o.g. Verfahren.

In einer bevorzugten Ausführungsform der Erfindung schließen sich zu beiden Seiten entlang der Bewegungsrichtung an das erste Teilungssegment jeweils gleich viele weitere Teilungssegmente an. Insbesondere bei konstantem Anwachsen der Segmentlänge zwischen einzelnen Segmenten auf beiden Seiten ergibt sich so bei einem rotatorischen Träger, dass die "randseitigen" Teilungssegmente, die am Endpunkt aneinander grenzen, sich in Ihrer Größe nur wenig unterscheiden.

In einer bevorzugten Ausführungsform weist jedes der Teilungssegmente eine Länge auf, die einer Grundlänge $L0$ zuzüglich eines ganzzahligen Vielfachen (Faktor) $n$ eines Längeninkrements $\Delta L$ entspricht. Der Wert des ganzzahligen Vielfachen $n$ kann hierbei die Null einschließen. Für den Fall ausschließlichen Ansteigens der Segmentlänge sind die Faktoren $n$ gleich Null oder positiv. Für das ausschließliche Abfallen der Segmentlänge sind die Vielfachen gleich Null oder negativ. Insbesondere werden lückenlose ganzzahlige Vielfache benutzt, um möglichst geringe Sprünge der Teilungssegmentlänge zwischen einzelnen Teilungssegmenten zu erreichen, d.h. die Faktoren $n$ aller Teilungssegmente unterscheiden sich nur jeweils um den Wert Eins.

In einer bevorzugten Ausführungsform weist das mittige erste - als kleinstes oder größtes - Teilungssegment die Grundlänge auf. Von diesem ausgehend sind die restlichen Teilungssegmente jeweils um lückenlos ganzzahlige Vielfache des Längeninkrements größer oder kleiner, wobei die Vielfachen - ausgehend vom ersten Teilungssegment - in der einen Richtung (in oder entgegen der Bewegungsrichtung) geradzahlig und in der entgegengesetzten Richtung ungeradzahlig sind. Diese Ausführungsform bildet diejenige mit minimal möglichen Längenunterschieden zwischen allen benachbarten Teilungssegmenten.

In einer bevorzugten Ausführungsform unterscheiden sich die Längen der beiden randseitigen Teilungssegmente nur um das Längeninkrement. Dies ist z.B. eine zwingende Folge der o.g. Ausgestaltung mit gleich vielen monoton anwachsenden Teilungssegmenten auf jeder Seite des ersten Teilungssegments.

In einer bevorzugten Ausführungsform weist das Längeninkrement $\Delta L$ eine Größe im Bereich von 0,1 % bis 10 % der Grundlänge $L0$ auf. Längeninkremente aus diesem Wertebereich führen zu praktikablen Ausführungsformen der Erfindung.

Wie bereits oben mehrfach erwähnt, ist in einer bevorzugten Ausführungsform der Träger ein in sich geschlossener ringförmiger, insbesondere kreisförmiger Träger eines Drehgebers. Die Aufteilung der Teilungssegmente - also die Größen aller Teilungssegmente - ist dann jeweils derart gewählt, dass alle Teilungssegmente entlang der Bewegungsrichtung lückenlos und überdeckungsfrei aneinander grenzen. Insbesondere stoßen also die beiden randseitig größten oder kleinsten Segmente am o.g. Endpunkt lückenlos und überlappungsfrei aneinander.

Die Aufgabe wird außerdem gelöst durch die Verwendung gemäß Patentanspruch 15 eines Trägers nach einem der Patentansprüche 8 bis 14 in einem Verfahren nach einem der Patentansprüche 1 bis 7. Eine derartige Verwendung eines Trägers vereint die Vorteile sowohl des o.g. Trägers als auch des o.g. Verfahrens miteinander und führt zu synergetischen Effekten, wie bereits oben genannt, da z.B. das verwendete Modellsignal den sich ändernden Phasenversätzen leicht folgen kann.

Für eine weitere Beschreibung der Erfindung wird auf die Ausführungsbeispiele der Zeichnungen verwiesen. Es zeigen, jeweils in einer schematischen Prinzipskizze:

Fig. 1 einen Träger eines Drehgebers,
Fig. 2 ideale und reale Messsignale des Drehgebers aus Fig. 1,
Fig. 3 die Erzeugung von Modellsignalen zu den Messsignalen aus Fig. 1,
Fig. 4 komplexe Ortskurven der Mess- und Modellsignale aus Fig. 3.

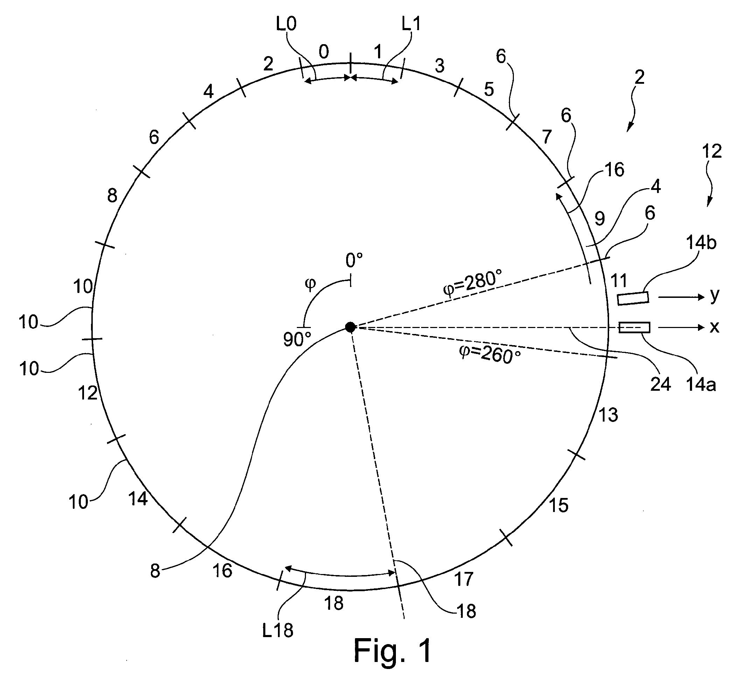

Fig. 1 zeigt einen Inkrementalgeber 2 in Form eines Drehgebers mit einem kreisrunden Träger 4 für Teilungsmarken 6. Der Träger 4 ist um eine Drehachse 8 drehbar gelagert. Die Teilungsmarken 6 begrenzen jeweilige Teilungssegmente 10, welche in Fig. 1 mit Segmentnummern "0" bis "18" durchnummeriert sind und im Folgenden auch kurz "Segment" genannt werden. Ausgehend vom ersten Segment "0" schließen sich im Uhrzeigersinn alle ungeradzahligen (1,3,...,17) und im Gegenuhrzeigersinn alle geradzahligen (2,4,...,18) Segmentnummern an.

Der Inkrementalgeber 2 weist außerdem eine Sensoranordnung 12 mit einem ersten Sensor 14a und zweiten Sensor 14b auf, welche beispielsweise ortsfest ruhend installiert sein könnte. Der Träger 4 rotiert bei Bewegung um die Drehachse 8, weshalb die Teilungssegmente 10 bzw. Teilungsmarken 6 z.B. entlang einer Bewegungsrichtung 16 des Trägers 4 an den Sensoren 14a, b vorbeigeführt werden.

Sämtliche Teilungssegmente 10 weisen eindeutige und unterschiedliche, d.h. paarweise verschiedene Segmentlängen L0 bis L18 auf. Bezogen auf einen "Endpunkt" 18 des Trägers (gedachter Radialstrahl, der dem Träger 4 ein "Ende" zuweist) ist entlang der Bewegungsrichtung 16 (also in Umfangsrichtung) etwa mittig das erste Teilungssegment 10 mit der Segmentnummer "0" angeordnet. Dessen Segmentlänge L0 stellt gleichzeitig eine Grundlänge für alle Teilungssegmente 10 dar. Die Segmentlängen L1 bis L18 der restlichen Segmente mit Nummern "1" bis "18" sind ausschließlich größer und steigen vom ersten Teilungssegment aus beidseitig entlang des Trägers, hier also in Umfangsrichtung, in ihrer Segmentlänge jeweils an. Der Anstieg erfolgt hierbei wechselweise zu beiden Seiten des ersten Segments. Es gilt also L18 > L17 > L16 > ... > L2 > L1 > L0. Außerdem befinden sich zwischen dem ersten Teilungssegment "0" und dem Endpunkt 18 zu beiden Seiten des ersten Teilungssegments gleich viele, nämlich jeweils neun weitere Teilungssegmente (2-18 und 1-17).

Die Längen der Teilungssegmente sind derart gebildet, dass die Segmentnummer mit dem Wert des Faktors n (ganzzahliges Vielfaches) gleichzusetzen ist, wobei gilt $Ln = L0 + n\,\Delta L$ mit n=0,1,...,18, der Grundlänge L0 und dem Längeninkrement $\Delta L$. In einer nicht dargestellten alternativen Ausführungsform ist das erste Teilungssegment mit der Grundlänge L0 das größte Teilungssegment, und die sich anschließenden Teilungssegmente nehmen in ihrer jeweiligen Länge entsprechend des oben genannten Bildungsgesetzes ab. Der Faktor n nimmt dann die Werte n=0,-1,...,-18 an. Eine Folge des oben genannten Bildungsgesetzes, nämlich Segmentlängen mit lückenlos ganzzahligen Vielfachen des Längeninkrements $\Delta L$ und der Grundlänge L0 und gleich vieler Teilungssegmente zu beiden Seiten des ersten Teilungssegments führen dazu, dass sich die beiden randseitigen Teilungssegmente, also die dem Endpunkt 18 benachbarten Segmente "17" und "18", nur um das Längeninkrement $\Delta L$ unterscheiden.

In Fig. 1 sind die Anzahl der Teilungssegmente, die Grundlänge L0 und die Längeninkrement $\Delta L$ so gewählt, dass bei gegebenem Umfang des Trägers 4 alle Teilungssegmente 10 lückenlos und überdeckungsfrei aneinanderstoßen, das heißt auf dem entsprechenden Umfang des Trägers 4 gerade Platz finden.

In einer nicht dargestellten alternativen Ausführungsform ist der Inkrementalgeber 2 als Lineargeber ausgeführt. Die Teilungssegmente 10 sind dann gerade und entlang einer Geraden aneinander gereiht, die der gerade gezogenen Umfangslinie des gezeigten Trägers 4 entspricht, wenn diese am Endpunkt 18 aufgetrennt wird. Die Bewegungsrichtung 16 ist dann ebenfalls eine Gerade. Ausgehend vom ersten Teilungssegment mit der Nummer "0" schließen sich dann in der einen Richtung bis zum ersten Ende des Trägers die Segmente "2" bis "18" an. In der entgegengesetzten Richtung bis zum anderen Ende des Trägers schließen sich die Segmente "1" bis "17" an.

Bei einer Bewegung des Inkrementalgebers um die Drehachse 8 soll dessen Absolutlage φ (Lage der Teilungsmarke 6 zwischen "0" und "1") in Form eines Drehwinkels, hier ausgehend von der in Fig. 1 strichpunktiert gezeigten Nullstellung 24, ermittelt werden. Hierzu werden die von den Sensoren 14a, b erzeugten ersten und zweiten Messsignale x, y verwendet. Die Messsignale x, y entstehen dadurch, dass entlang der Bewegungsrichtung 16 die Teilungsmarken 6 an den ersten und zweiten Sensoren 14a, b vorbei bewegt werden, welche auf die Teilungsmarken 6 ansprechen. Die Absolutlage des Trägers 4 wird nach folgendem Verfahren ermittelt:

Zunächst werden mit Hilfe des ersten Sensors 14a das Messsignal x und mit Hilfe des zweiten Sensors 14b das Messsignal y erzeugt. Der Träger 4 aus Fig. 1 bewegt sich im Beispiel entgegen der Uhrzeigerrichtung. Da selbe Teilungsmarken 6 den ersten Sensor 14a vor dem zweiten Sensor 14b passieren, eilt das Messsignal x dem Messsignal y voraus. Die (realen, mit Messfehlern etc. beaufschlagten) Messsignale x, y sind für das Passieren der Segmente "11" und "13" in Fig. 2 dargestellt. Zusätzlich zu den tatsächlichen Messsignalen x, y werden theoretisch ideale Messsignale xi, yi erzeugt, welche ideale erste und zweite Sensoren 14a, b bei idealen Bedingungen mit idealen Teilungsmarken 6 erzeugen würden. Diese werden als rein cosinusförmig angenommen. Die Cosinussignale weisen hierbei die Periodenlänge der jeweiligen Segmentlänge L11 und L13 auf, wobei diese zu Beginn der jeweiligen Segmente identische Phasenlage (hier Phase 0) aufweisen.

Aus den idealen Messsignalen xi, yi wird der jeweilige theoretische Phasenversatz $\Delta \alpha t$ innerhalb des betreffenden Teilungssegments bestimmt. Im Segment "11" ergibt sich $\Delta \alpha t = 90°$, im Segment "13" ergibt sich $\Delta \alpha t = 60°$. Die im Beispiel verwendeten Zahlenwerte dienen nur der Anschaulichkeit und entsprechen nicht unbedingt realen Verhältnissen.

Anschließend werden gemäß Fig. 3 Modellsignale xm und ym erzeugt, welche das erste und zweite Messsignal x, y modellieren. Den Modellsignalen xm und ym liegt ein Parametersatz P1, P2 ... zugrunde, der die Signale eindeutig bestimmt. Als Ausgangspunkt werden Startwerte für die Parameter P1, P2, ... verwendet. Durch die realen Messsignale x, y und ein Adaptionskriterium 20 werden die Modellsignale xm und ym im laufenden Messbetrieb ständig modifiziert und angepasst, so dass diese möglichst genau die Messsignale x,y abbilden. Zwischen den Modellsignalen xm und ym wird sodann der sich ergebende aktuelle Modellphasenversatz $\Delta \alpha m$ ermittelt, im Beispiel zu 88°. Aus den vorab ermittelten verschiedenen theoretischen Phasenversätzen $\Delta \alpha t$ (hier 90° und 60°) wird nun derjenige ausgewählt, welcher dem aktuellen Modellphasenversatz $\Delta \alpha m$ am nächsten entspricht. Im vorliegenden Fall ist dies der theoretische Phasenversatz $\Delta \alpha t = 90°$ des Teilungssegments "11". Somit ist als Groblage bekannt, das der aktuelle Wert der Absolutlage $\varphi$ im Bereich des Segments "11" liegt, das heißt ca. zwischen $\varphi = 260°$ und $\varphi = 280°$ gemäß Fig. 1. Zuletzt wird die aktuelle Phasenlage $\alpha m$ aus den Modellsignalen xm und ym bestimmt, welche die Position $\varphi_{rel}$ der Sensoranordnung 12 innerhalb des Teilungssegments "11" angibt. Ein Wert von $\alpha m = 0°$ ($\varphi_{rel}=0°$) würde dann zu einem Wert $\varphi = 260°$ (Anfang des Segments "11") führen, ein Wert von $\alpha m = 360°$ ($\varphi_{rel}=30°$) würde zu einem Wert von $\varphi = 280°$ führen (Ende des Segments "11"). Es ergibt sich aktuell $\alpha m = 120°$ und damit $\varphi_{rel}=10°$ als Feinlage, und somit als aktuelle Phasenlage $\varphi = 270°$.

Fig. 3 zeigt gestrichelt die o.g. alternative Methode (Berechnung nach "Hütte") zur Ermittlung des Modellphasenversatzes $\Delta \alpha m$ aus dem Satz der Parameter P1, P2, ... Für die Ermittlung der Phasenlage $\alpha m$ aus den Messsignalen x und y und den Modellsignalen xm und ym wird auf die DE 43 31 151 C2 Fig. 2 in Verbindung mit der zugehörigen Beschreibung verwiesen. Das dort vorgestellte Verfahren kann gemäß der in Fig. 3 gestrichelt gezeichneten Variante erweitert werden, das heißt der aktuelle Modellphasenversatz $\Delta \alpha m$ wird dann aus dem Parametersatz am Ausgang der Integrier- bzw. Summierstufe 21 ermittelt.

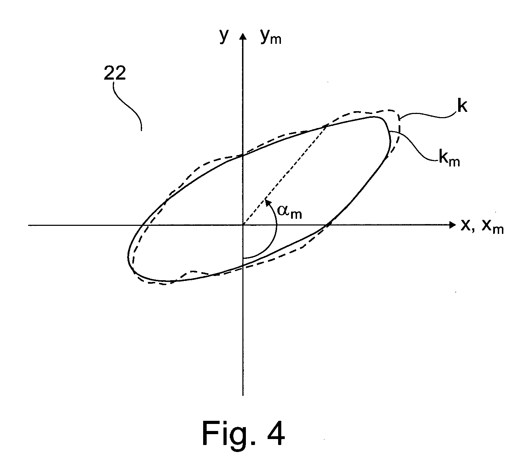

Fig. 4 zeigt, wie aus dem ersten Messsignal x und dem zweiten Messsignal y durch deren Verwendung als Realteil und Imaginärteil eine komplexe Messortskurve K in der komplexen Ebene 22 erzeugt wird. Ebenso wird aus dem ersten Modellsignal xm als Realteil und dem zweiten Modellsignal ym als Imaginärteil eine komplexe Modellortskurve Km erzeugt. Die Anpassung des jeweiligen Modellsignals xm, ym an das zugehörige Messsignal x, y erfolgt durch Anpassen der Modellortskurve Km an die Messortskurve K in der komplexen Ebene 22. Die Ermittlung der aktuellen Phasenlage $\alpha m$ erfolgt an der Modellortskurve Km wie oben (DE 43 31 151 C2) beschrieben.

**Bezugszeichenliste**

2 Inkrementalgeber

4 Träger

6 Teilungsmarke

8 Drehachse

10 Teilungssegment

12 Sensoranordnung

14a,b erster, zweiter Sensor

16 Bewegungsrichtung

18 Endpunkt

20 Adaptionskriterium

22 komplexe Ebene

24 Nullstellung

L0,L1,... Segmentlänge

L0 Grundlänge

$\Delta L$ Längeninkrement

x, y erstes, zweites Messsignal

xi, yi erstes, zweites ideales Messsignal

xm, ym erstes, zweites Modellsignal

$\varphi$ Absolutlage

$\varphi_{rel}$ Relativlage

$\Delta \alpha t$ theoretischer Phasenversatz

$\Delta \alpha m$ aktueller Modell-Phasenversatz

$\alpha m$ aktuelle Phasenlage

P1,P2,... Parameter

K Ortskurve

Km Modell-Ortskurve

n ganzzahliges Vielfaches

**Patentansprüche**

1. Verfahren zum Ermitteln der Absolutlage ($\varphi$) eines sich bewegenden Trägers (4) für Teilungsmarken (6) eines Inkrementalgebers (2) gegenüber einer Sensoranordnung (12), wobei auf dem Träger (4) Teilungssegmente (10) mit paarweise verschiedenen Segmentlängen (L0,L1,L2,...) zwischen den Teilungsmarken (6) vorhanden sind, mit folgenden Schritten:

a) Erzeugen eines ersten Messsignals (x) mit einem ersten Sensor (14a) der Sensoranordnung (12),
b) entsprechendes Erzeugen eines zweiten Messsignals (y) mit einem zweiten Sensor (14b) der Sensoranordnung (12), der zum ersten Sensor (14a) entlang einer Bewegungsrichtung (16) des Trägers (4) versetzt angeordnet wird,

**gekennzeichnet durch** die weiteren Schritte:

c) für jedes Teilungssegment (10): theoretisches Ermitteln des jeweiligen theoretischen Phasenversatzes ($\Delta \alpha t$) zwischen theoretisch idealen Messsignalen (xi, yi) des ersten (14a) und zweiten Sensors (14b),
d) Erzeugen eines ersten (xm) und zweiten Modellsignals (ym), die auf einem Satz von Parametern (P1,P2,...)

basieren und die jeweils das erste (x) und zweite zugehörige Messsignal (y) modellieren, unter Verwendung von Startwerten für die Parameter (P1,P2,...),
e) Wiederholtes Durchführen der Schritte:

aa) Anpassen des jeweiligen Modellsignals (xm,ym) an das zugehörige Messsignal (x,y) **durch** Adaptieren der Parameter (P1,P2,...) anhand eines Adaptionskriteriums (20) und der aktuellen Werte der Messsignale (x,y)
bb) Ermitteln des aktuellen Modell-Phasenversatzes ($\Delta\alpha$m) zwischen den Modellsignalen (xm,ym),
cc) Auswählen des dem aktuellen Modell-Phasenversatz ($\Delta\alpha$m) entsprechenden theoretischen Phasenversatzes $\Delta\alpha$t) und Wählen des zum ausgewählten theoretischen Phasenversatz $\Delta\alpha$t) gehörigen Teilungssegments (10) als aktuelles Teilungssegment (10) für die Absolutlage ($\varphi$),
dd) Ermitteln der Absolutlage ($\varphi$) des Trägers (4) gegenüber der Sensoranordnung aus der bekannten Lage des aktuellen Teilungssegments und einer Relativlage ($\varphi_{rel}$) innerhalb des aktuellen Teilungssegments, die aus der aktuellen Phasenlage ($\alpha$m) der Modellsignale (xm, ym) innerhalb des aktuellen Teilungssegments bestimmt wird.

2. Verfahren nach Anspruch 1, bei dem in Schritt bb) der aktuelle Modell-Phasenversatz ($\Delta\alpha$m) aus dem Satz der Parameter (P1,P2,...) ermittelt wird.

3. Verfahren nach einem der vorhergehenden Ansprüche, bei dem

- eine komplexe Mess-Ortskurve (K) aus dem ersten Messsignal (x) als Realteil und dem zweiten Messignal (y) als Imaginärteil erzeugt wird,
- eine komplexe Modell-Ortskurve (Km) mit dem ersten Modellsignal (xm) als Realteil und dem zweiten Modellsignal (ym) als Imaginärteil erzeugt wird,
- das Anpassen des jeweiligen Modellsignals (xm,ym) an das zughörige Messsignal (x,y) in Schritt aa) durch Anpassen der Modell-Ortskurve (Km) an die Mess-Ortskurve (K) erfolgt,
- das Ermitteln der Absolutlage ($\varphi$) in Schritt dd) aus der aktuellen Phasenlage ($\alpha$m) der Modell-Ortskurve erfolgt.

4. Verfahren nach einem der vorhergehenden Ansprüche, bei dem in Schritt d) das erste Modellsignal (xm) in der Form

$$xm = x0 + (xc + xd)\cos \propto\ -(yc - yd)\sin \propto$$

und das zweite Modellsignal (ym) in der Form

$$ym = y0 + (yc + yd)\cos \propto\ +(xc - xd)\sin \propto$$

dargestellt wird, wobei die Parameter {x0,y0,xc,yc,xd,yd} den Parametersatz (P1,P2,...) bilden.

5. Verfahren nach einem der vorhergehenden Ansprüche, bei dem in Schritt c) als theoretisch ideale Messsignale (xi, yi) rein cosinusförmige Messsignale (xi,yi) angenommen werden, die als Periodenlänge die Segmentlänge (L0,L1,...) des jeweiligen Teilungssegments (10) aufweisen und die am Anfang des selben Teilungssegments (10) jeweils den selben Phasenwinkel aufweisen.

6. Verfahren nach einem der vorhergehenden Ansprüche, bei dem in Schritt bb) das erste Modellsignal (xm) in der Form

$$xm = x0 + a\cos \omega t + b\ sin\ \omega t = x0 + c\sin(\omega t + \gamma)$$

und das zweite Modellsignal (ym) in der Form

$$ym = y0 + d\cos \omega t + e\ sin\ \omega t = y0 + f\sin(\omega t + \eta)$$

dargestellt wird, und der aktuelle Modell-Phasenversatz ($\Delta\alpha$m) aus der Differenz $\gamma$ - $\eta$ ermittelt wird.

7. Verfahren nach einem der vorhergehenden Ansprüche, bei dem in Schritt b) der zweite Sensor (14b) höchstens um die Hälfte der kleinsten Segmentlänge (L0,L1,L2,...) entlang des Trägers (4) zum ersten Sensor (14a) versetzt angeordnet wird.

8. Träger (4) für Teilungsmarken (6) eines Inkrementalgebers (2), wobei auf dem Träger (4) entlang einer Bewegungsrichtung (16) Teilungssegmente (10) mit paarweise verschiedener Segmentlänge (L0,L1,L2,...) zwischen den Teilungsmarken (6) angeordnet sind, **gekennzeichnet durch**

   - ein entlang der Bewegungsrichtung (16) etwa mittig angeordnetes erstes Teilungssegment (10) einer Grundlänge (L0),
   - wobei die Segmentlängen (L0,L1,L2,...) der restlichen Teilungssegmente (10) entlang der Bewegungsrichtung (16) zu beiden Seiten ausgehend vom ersten Teilungssegment (10) jeweils wechselweise ausschließlich ansteigen oder ausschließlich abfallen.

9. Träger (4) nach Anspruch 8, bei dem sich an das erste Teilungssegment (10) entlang der Bewegungsrichtung (16) zu beiden Seiten jeweils gleich viele weitere Teilungssegmente (10) anschließen.

10. Träger (4) nach einem der Ansprüche 8 bis 9, bei dem jedes der Teilungssegmente (10) eine Segmentlänge (L0,L1,L2,...) aufweist, die der Grundlänge (L0) zuzüglich eines ganzzahligen Vielfachen (n) eines Längeninkrements ($\Delta$L) entspricht

11. Träger (4) nach Anspruch 10, bei dem das kleinste oder größte Teilungssegment (10) die Grundlänge (L0) aufweist und von diesem ausgehend die restlichen Teilungssegmente (10) jeweils um lückenlos ganzzahlige Vielfache (n) des Längeninkrements ($\Delta$L) größer oder kleiner sind, wobei die Vielfachen (n) in oder entgegen der Bewegungsrichtung (16) geradzahlig und in der entgegengesetzten Richtung ungeradzahlig sind.

12. Träger (4) nach einem der Ansprüche 10 bis 11, bei dem sich die Segmentlängen (L0,L1,L2,...) der beiden randseitigen Teilungssegmente (10) nur um das Längeninkrement ($\Delta$L) unterscheiden.

13. Träger (4) nach einem der Ansprüche 10 bis 12, bei dem das Längeninkrement ($\Delta$L) eine Größe im Bereich 0,1% bis 10% der Grundlänge (L0) aufweist.

14. Träger (4) nach einem der Ansprüche 8 bis 13, der ein in sich geschlossener ringförmiger, insbesondere kreisförmiger Träger (4) eines Drehgebers als Inkrementalgeber (2) ist, und bei dem die Aufteilung der Teilungssegmente (10) derart gewählt ist, dass alle Teilungssegmente (10) entlang der Bewegungsrichtung (16) lückenlos und überdeckungsfrei aneinandergrenzen.

15. Verwendung eines Trägers (4) nach einem der Ansprüche 8 bis 14 in einem Verfahren nach einem der Ansprüche 1 bis 7.


**Claims**

1. A method for determining the absolute position ($\varphi$) of a moving carrier (4) for scale marks (6) of an incremental encoder (2) with respect to a sensor arrangement (12), scale segments (10) having segment lengths (L0,L1,L2...) differing by pairs being present between the scale marks (6) on the carrier (4), comprising the following steps:

   a) generating a first measuring signal (x) with a first sensor (14a) of the sensor arrangement (12),
   b) correspondingly generating a second measuring signal (y) with a second sensor (14b) of the sensor arrangement (12), which second sensor is disposed offset relative to the first sensor (14a) along a direction of movement (16) of the carrier (4),

   **characterised by** the further steps:

   c) for each scale segment (10): theoretically determining the respective theoretical phase shift ($\Delta\alpha t$) between theoretically ideal measuring signals (xi, yi) of the first (14a) and the second sensor (14b),
   d) generating a first (xm) and a second model signal (ym) based on a set of parameters (P1,P2,...), and which respectively model the first (x) and the second associated measuring signal (y), using starting values for the parameters (P1,P2,...),

e) repeatedly carrying out the steps:

aa) adapting the respective model signal (xm,ym) to the associated measuring signal (x,y) by adapting the parameters (P1,P2,...) based on an adaptation criterion (20) and the current values of the measuring signals (x,y),

bb) determining the current model phase shift ($\Delta\alpha$m) between the model signals (xm,ym),

cc) selecting the theoretical phase shift ($\Delta\alpha$t) corresponding to the current model phase shift ($\Delta\alpha$m) and choosing as a current scale segment (10) for the absolute position ($\varphi$) the scale segment (10) related to the selected theoretical phase shift ($\Delta\alpha$t),

dd) determining the absolute position ($\varphi$) of the carrier (4) with respect to the sensor arrangement from the known position of the current scale segment and from a relative position ($\varphi_{rel}$) within the current scale segment, which is defined based on the current phase position ($\alpha$m) of the model signals (xm, ym) within the current scale segment.

2. The method according to Claim 1, wherein in step bb), the current model phase shift ($\Delta\alpha$m) is determined from the set of parameters (P1,P2,...).

3. The method according to any of the preceding claims, wherein

- a complex measuring locus (K) is generated from the first measuring signal (x) as the real part and from the second measuring signal (y) as the imaginary part,
- a complex model locus (Km) is generated with the first model signal (xm) as the real part and the second model signal (ym) as the imaginary part,
- the respective model signal (xm,ym) is adapted to the associated measuring signal (x,y) in step aa) by adapting the model locus (Km) to the measuring locus (K),
- the absolute position ($\varphi$) is determined in step dd) from the current phase position ($\alpha$m) of the model locus.

4. The method according to any of the preceding claims, wherein in step d) the first model signal (xm) is represented in the form

$$xm = x0 + (xc + xd) \cos \propto - (yc - yd) \sin \propto$$

and the second model signal (ym) is represented in the form

$$ym = y0 + (yc + yd) \cos \propto - (xc - xd) \sin \propto$$

the parameters {x0,y0,xc,yc,xd,yd,] forming the parameter set (P1,P2,...).

5. The method according to any of the preceding claims, wherein in step c) purely cosinusoidal measuring signals (xi,yi) are assumed to be theoretically ideal measuring signals (xi, yi), which cosinusoial measuring signals have as their period length the segment length (L0,L1,...) of the respective scale segment (10) and each of which have the same phase angle at the start of the same scale segment (10).

6. The method according to any of the preceding claims, wherein in step bb) the first model signal (xm) is represented in the form

$$xm = x0 + \alpha \cos \omega t + b \sin \omega t = x0 + c \sin(\omega t + \gamma)$$

and the second model signal (ym) is represented in the form

$$ym = y0 + d \cos \omega t + e \sin \omega t = y0 + f \sin(\omega t + \eta)$$

and the current model phase shift ($\Delta\alpha$m) is determined from the difference $\gamma$ - $\eta$.

7. The method according to any of the preceding claims, wherein in step b) the second sensor (14b) is disposed offset along the carrier (4) relative to the first sensor (14a) by at most half the smallest segment length (L0,L1,L2,...).

8. A carrier (4) for scale marks (6) of an incremental encoder (2), scale segments (10) having segment lengths (L0,L1,L2,...) different by pairs being disposed between the scale marks (6) on the carrier (4) along a direction of movement (16),
**characterised by**

- a first scale segment (10) of a base length (L0) disposed approximately centrally along the direction of movement (16),
- the segment lengths (L0,L1,L2,...) of the remaining scale segments (10) each alternately solely increasing or solely decreasing along the direction of movement (16) on both sides starting from the first scale segment (10).

9. The carrier (4) according to Claim 8, wherein the first scale segment (10) is followed on both sides along the direction of movement (16) in each case by an equal number of additional scale segments (10).

10. The carrier (4) according to any of Claims 8 to 9, wherein each of the scale segments (10) has a segment length (L0,L1,L2,...) which corresponds to the base length (L0) plus a whole-numbered multiple (n) of a length increment ($\Delta$L).

11. The carrier (4) according to Claim 10, wherein the smallest or largest scale segment (10) has the base length (L0) and, based on this, the remaining scale segments (10) are each larger or smaller by complete whole-numbered multiples (n) of the length increment ($\Delta$L), the multiples (n) being even-numbered in or counter to the direction of movement (16) and odd-numbered in the opposite direction.

12. The carrier (4) according to either of Claims 10 to 11, wherein the segment lengths (L0,L1,L2,...) of the two edge scale segments (10) differ only by the length increment ($\Delta$L).

13. The carrier (4) according to any of Claims 10 to 12, wherein the size of the length increment ($\Delta$L) is in the range of 0.1% to 10% of the base length (L0).

14. The carrier (4) according to any of Claims 8 to 13, which is a self-contained annular, in particular circular carrier (4) of an incremental encoder (2) in the form of a rotary encoder, and wherein the division of the scale segments (10) is selected in such a way that all scale segments (10) adjoin one another completely and without overlapping along the direction of movement (16).

15. The use of a carrier (4) according to any of Claims 8 to 14 in a method according to any of Claims 1 to 7.

**Revendications**

1. Procédé de mesure de la position absolue ($\varphi$) d'un support (4) mobile pour des repères de division (6) d'un codeur incrémental (2) par rapport à un agencement de capteurs (12), des segments de division (10) avec des longueurs de segment (L0, L1, L2, ...) différentes par paires étant présents entre les repères de division (6), avec des étapes suivantes :

a) génération d'un premier signal de mesure (x) avec un premier capteur (14a) de l'agencement de capteurs (12),
b) génération correspondante d'un deuxième signal de mesure (y) avec un deuxième capteur (14b) de l'agencement de capteurs (12) qui est décalé par rapport au premier capteur (14a) le long d'une direction de mouvement (16) du support (4),

**caractérisé par** les étapes suivantes :

c) pour chaque segment de division (10) : déterminer de manière théorique le décalage de phase théorique respectif ($\Delta\alpha$t) entre des signaux de mesure théoriques idéaux (xi, yi) du premier (14a) et du deuxième (14b) capteur,
d) engendrer un premier (xm) et un deuxième (ym) signal modèle qui sont basés sur un ensemble de paramètres (P1, P2, ...) et qui modélisent, en utilisant des valeurs de départ pour les paramètres (P1, P2, ...), respectivement le premier (x) et le deuxième (y) signal de mesure associé,

e) effectuer de manière répétitive les étapes :

aa) adapter le signal modèle (xm, ym) respectif au signal de mesure associé (x, y) en adaptant les paramètres (P1, P2, ...) sur la base d'un critère d'adaptation (20) et des valeurs actuelles des signaux de mesure (x, y),

bb) déterminer le décalage de phase modèle actuel ($\Delta\alpha$m) entre les signaux modèles (xm, ym),

cc) sélectionner le décalage de phase théorique ($\Delta\alpha$t) correspondant au décalage de phase modèle actuel ($\Delta\alpha$m) correspondant et choisir le segment de division (10) associé au décalage de phase théorique ($\Delta\alpha$t) sélectionné, comme segment de division (10) actuel pour la position absolue ($\varphi$),

dd) déterminer la position absolue ($\varphi$) du support (4) par rapport à l'agencement de capteurs à partir de la position connue du segment de division actuel et d'une position relative ($\varphi_{rel}$) à l'intérieur du segment de division actuel qui est déterminée à partir de la position de phase actuelle ($\alpha$m) des signaux modèles (xm, ym) à l'intérieur du segment de division actuel.

2. Procédé selon la revendication 1, dans lequel, à l'étape bb), le décalage de phase modèle actuel ($\Delta\alpha$m) est déterminé à partir de l'ensemble de paramètres (P1, P2, ...).

3. Procédé selon l'une des revendications précédentes, dans lequel

- un diagramme de points de mesure complexe (K) est formé à partir du premier signal de mesure (x) comme partie réelle et à partir du deuxième signal de mesure (y) comme partie imaginaire,
- un diagramme de points modèle complexe (Km) est formé avec le premier signal modèle (xm) comme partie réelle et le deuxième signal modèle (ym) comme partie imaginaire,
- l'adaptation du signal modèle (xm, ym) respectif au signal de mesure (x, y) associé est effectuée à l'étape aa) par adaptation du diagramme de points modèle complexe (Km) au diagramme de points de mesure (K),
- la détermination de la position absolue ($\varphi$) à l'étape dd) est effectuée à partir de la position de phase actuelle ($\alpha$m) du diagramme de points modèle.

4. Procédé selon l'une des revendications précédentes, dans lequel, à l'étape d), le premier signal modèle (xm) se présente sous la forme

$$xm = x0 + (xc + xd) \cos \alpha - (yc - yd) \sin \alpha$$

et le deuxième signal modèle (ym) se présente sous la forme

$$ym = y0 + (yc + yd) \cos \alpha - (xc - xd) \sin \alpha,$$

les paramètres {x0, y0, xc, yc, xd, yd} formant l'ensemble de paramètres (P1, P2, ...).

5. Procédé selon l'une des revendications précédentes, dans lequel, à l'étape c), on prend comme signaux de mesure théoriquement idéaux (xi, yi) des signaux de mesure de forme cosinusoïdale (xi, yi) qui présentent, comme longueur de période, la longueur de segment (L0, L1, ...) du segment de division (10) respectif et qui présentent au début du même segment de division (10) chaque fois le même angle de phase.

6. Procédé selon l'une des revendications précédentes, dans lequel, à l'étape bb), le premier signal modèle (xm) se présente sous la forme

$$xm = x0 + a \cos \omega t + b \sin \omega t = x0 + c \sin (\omega t + \gamma)$$

et le deuxième signal modèle (ym) se présente sous la forme

$$ym = y0 + d \cos \omega t + e \sin \omega t = y0 + f \sin (\omega t + \eta)$$

et le décalage de phase modèle actuel ($\Delta\alpha$m) est déterminé à partir de la différence y - $\eta$.

7. Procédé selon l'une des revendications précédentes, dans lequel, à l'étape b), le deuxième capteur (14b) est disposé au maximum avec un décalage de la moitié de la longueur de segment la plus petite (L0, L1, L2, ...) le long du support (4), par rapport au premier capteur (14a).

8. Support (4) pour des repères de division (6) d'un codeur incrémental (2), des segments de division (10) avec des longueurs de segment (L0, L1, L2, ...) différentes par paires entre les repères de division (6) étant présents sur le support (4) le long d'une direction de mouvement (16), **caractérisé par**

   - un premier segment de division (10) d'une longueur de base (L0) disposé de manière approximativement centrée le long de la direction de mouvement (16),
   - les longueurs de segment (L0, L1, L2, ...) des segments de division restants (10) le long de la direction de mouvement (16) étant des deux côtés, partant du premier segment de division (10), respectivement en alternance exclusivement croissantes ou exclusivement décroissantes.

9. Support (4) selon la revendication 8, dans lequel suivent au premier segment de division (10) le long de la direction de mouvement (16), des deux côtés un même nombre d'autres segments de division (10).

10. Support (4) selon l'une des revendications 8 à 9, dans lequel chacun des segments de division (10) présente une longueur de segment (L0 L1, L2, ...) qui correspond à la longueur de base (L0) augmentée d'un multiple entier (n) d'un incrément de longueur ($\Delta$L).

11. Support (4) selon la revendication 10, dans lequel le segment de division (10) le plus petit ou le plus grand présente la longueur de base (L0) et, à partir de celui-ci, les segments de division (10) restants sont respectivement plus grands ou plus petits de multiples entiers (n) se suivant de manière ininterrompue, de l'incrément de longueur ($\Delta$L), les multiples (n) dans la direction de mouvement (16) ou à l'encontre de celle-ci étant paires et ceux dans la direction respectivement opposée étant impaires.

12. Support (4) selon l'une des revendications 10 à 11, dans lequel les longueurs de segment (L0, L1, L2, ...) de deux segments de division (10) du côté du bord se distinguent uniquement par l'incrément de longueur ($\Delta$L).

13. Support (4) selon l'une des revendications 10 à 12, dans lequel l'incrément de longueur ($\Delta$L) présente une valeur dans la plage de 0,1 % à 10 % de la longueur de base (L0).

14. Support (4) selon l'une des revendications 8 à 13, qui est un support (4) de forme annulaire, fermé sur lui-même, notamment de forme circulaire, d'une sonde rotative comme sonde d'incrémentale (2) et pour lequel la répartition des segments de division (10) est choisie de façon telle que tous les segments de division sont adjacents les uns aux autres de manière ininterrompue et sans se chevaucher.

15. Utilisation d'un support (4) selon l'une des revendications 8 à 14 dans un procédé selon l'une des revendications 1 à 7.

Fig. 1

Fig. 2

Fig. 3

Fig. 4

**IN DER BESCHREIBUNG AUFGEFÜHRTE DOKUMENTE**

**In der Beschreibung aufgeführte Patentdokumente**

- DE 4331151 C2
- DE 102004062278 A1
- US 4757244 A
- DE 102007008870 A1

**In der Beschreibung aufgeführte Nicht-Patentliteratur**

- Des Ingenieurs Taschenbuch. **HÜTTE.** Theoretische Grundlagen. Verlag von Wilhelm Ernst & Sohn, 1955, 568